# EUROPEAN PATENT APPLICATION

(11) **EP 4 664 568 A1**
(43) Date of publication of application: **17.12.2025**
(21) Application number: 25160444.3
(22) Date of filing: 27.02.2025
(51) Int. Cl.: H01M 4/66

(54) **ELECTRODE SUBSTRATE FOR RECHARGEALE LITHIUM BATTERY AND RECHARGEABLE LITHIUM BATTERY INCLUDING THE SAME**

(30) Priority: 09.04.2024 KR 20240047749
(71) Applicant: SAMSUNG SDI CO., LTD., Yongin-si, Gyeonggi-do 17084 (KR)
(72) Inventor: Kwon, Minseok, 17084 Yongin-si, Gyeonggi-do (KR); Hwang, Heeyeon, 17084 Yongin-si, Gyeonggi-do (KR); Lee, KyuSeo, 17084 Yongin-si, Gyeonggi-do (KR); Cha, Jungwook, 17084 Yongin-si, Gyeonggi-do (KR); Kim, Suhyun, 17084 Yongin-si, Gyeonggi-do (KR); Kang, Dayoung, 17084 Yongin-si, Gyeonggi-do (KR)
(74) Representative: Michalski Hüttermann & Partner Patentanwälte mbB

(57) **Abstract**

Disclosed are electrode substrates for rechargeable lithium batteries, and rechargeable lithium batteries including the electrode substrates. The electrode substrate for a rechargeable lithium battery includes a support layer that includes a polymer resin matrix and a fiber, and a metal layer on at least one surface of the support layer. An average cross-sectional diameter of the fiber is in a range of about 0.1 µm to about 10 µm.

## Description

### CROSS-REFERENCE TO RELATED APPLICATION

This application claims priority to Korean Patent Application No. 10-2024-0047749 filed on April 9, 2024 in the Korean Intellectual Property Office.

### BACKGROUND

Example embodiments relate to an electrode substrate for a rechargeable lithium battery, and a rechargeable lithium battery including the electrode substrate.

With the increasing spread of batteries using electronic devices, such as, e.g., mobile phones, laptop computers, and electric vehicles, there is a demand for rechargeable batteries with high energy density and high capacity.

A rechargeable lithium battery typically includes a positive electrode, a negative electrode, and an electrolyte, the positive and negative electrodes include an active material in which intercalation and deintercalation are possible, and the rechargeable lithium battery generates electrical energy caused by oxidation and reduction reactions when lithium ions are intercalated and deintercalated.

### SUMMARY

An example embodiment of the present disclosure includes a substrate whose mechanical strength is improved.

An example embodiment of the present disclosure includes a rechargeable lithium battery including a substrate.

According to an example embodiment of the present disclosure, an electrode substrate for a rechargeable lithium battery may include a support layer that includes a polymer resin matrix and a fiber; and a metal layer on at least one surface of the support layer. An average cross-sectional diameter of the fiber may be in a range of ≥ 0.1 µm to ≤ 10 µm. The support layer may have a thickness of ≥ 3 µm to ≤ 10 µm. The thickness of the support layer SPL may be greater than that of the metal layer, preferably the ration between the thickness of the support layer and the metal layer (or the metal layers should more than one layer be present) is ≥ 2 to ≤ 1:1, more preferred ≥ 1.8 to ≤ 1.2.

According to an example embodiment of the present disclosure, a rechargeable lithium battery may include the electrode substrate for the rechargeable lithium battery; and a battery cell on the electrode substrate for the rechargeable lithium battery.

According to an example embodiment of the present disclosure, a rechargeable lithium battery may include an electrode substrate for the rechargeable lithium battery, the electrode substrate including a support layer and a metal layer on the support layer; a first active material layer on the metal layer; a separator on the first active material layer; and a second active material layer on the separator. The support layer may include a prepreg in which a polymer resin matrix is impregnated into a fiber.

According to an embodiment, the fiber may be unidirectionally oriented.

According to an embodiment, the fiber may be oriented in a first direction D1 and may be or include a "continuous fiber in the form of long fiber." A major axis, or a longitudinal direction, of the "continuous fiber in the form of long fiber" may be substantially parallel to the first direction D1.

According to an embodiment, the fiber may have an average cross-sectional diameter W, or a length of a minor axis substantially perpendicular to the major axis. The average cross-sectional diameter W of the fiber may range from ≥ 0.1 µm to ≤ 10 µm. For example, the average cross-sectional diameter W of the fiber may range from ≥ 0.1 µm to ≤ 8 µm or from ≥ 1 µm to ≤ 6 µm. When the fiber has an average cross-sectional diameter W of less than the range above, strength of the composite substrate CPS may decrease to induce a reduction in bending strength, and when the fiber has an average cross-sectional diameter W of greater than the range above, flexibility of the composite substrate CPS may decease to induce a reduction in tensile elongation.

### BRIEF DESCRIPTION OF DRAWINGS

FIG. 1 illustrates a simplified conceptual diagram showing a rechargeable lithium battery according to an example embodiment of the present disclosure.
FIGS. 2 to 5 illustrate simplified diagrams showing a rechargeable lithium battery according to an example embodiment of the present disclosure.
FIG. 6 illustrates a cross-sectional view showing a rechargeable lithium battery according to an example embodiment of the present disclosure.
FIG. 7 illustrates a perspective view showing an electrode substrate for a rechargeable lithium battery according to an example embodiment of the present disclosure.
FIG. 8 illustrates a cross-sectional view taken along a plane A of FIG. 7 according to an example embodiment of the present disclosure.
FIG. 9 illustrates a cross-sectional view taken along a plane B of FIG. 7 according to an example embodiment of the present disclosure.
FIG. 10 illustrates a perspective view showing a fiber orientation within a support layer according to an example embodiment of the present disclosure.
FIG. 11 illustrates a cross-sectional view taken along a plane A of FIG. 7 according to another example embodiment of the present disclosure.
FIG. 12 illustrates a perspective view showing a fiber orientation within a support layer according to another embodiment of the present disclosure.

### DETAILED DESCRIPTION OF EMBODIMENTS

In order to sufficiently understand the configuration and effect of the present disclosure, some example embodiments of the present disclosure will be described with reference to the accompanying drawings. It should be noted, however, that the present disclosure is not limited to the following example embodiments, and may be implemented in various forms. Rather, the exemplary embodiments are provided only to disclose the present disclosure and let those skilled in the art fully know the scope of the present disclosure.

In this description, it will be understood that, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) where a cumulative volume is 50 volume % in a particle size distribution. The average particle diameter (D₅₀) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter (D₅₀) value may be obtained through a calculation. Dissimilarly, a laser scattering method may be utilized to measure the average particle diameter (D₅₀). In the laser scattering method, a target particle is distributed in a distribution solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

In this description, the term "cross-sectional diameter" may indicate a length of a minor axis that passes through a center of fiber, and the term "length" may denote a length of a major axis that passes through a center of fiber.

In this description, it is preferable to determine the "average cross-sectional diameter" by calculating an average cross-sectional diameter of all fibers present in a single cross-section of a support layer SPL, but it is possible to calculate an average diameter of fibers present in a portion of a single cross-section of the support layer SPL, for example, in an area of 1 mm2.

In this description, it is preferable to determine the "average length" by calculating an average length of all fibers included in a support layer SPL, but it is possible to obtain the average length by calculating an average length of fibers present in a partial region of the support layer SPL, for example, in a volume of 1 mm3.When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

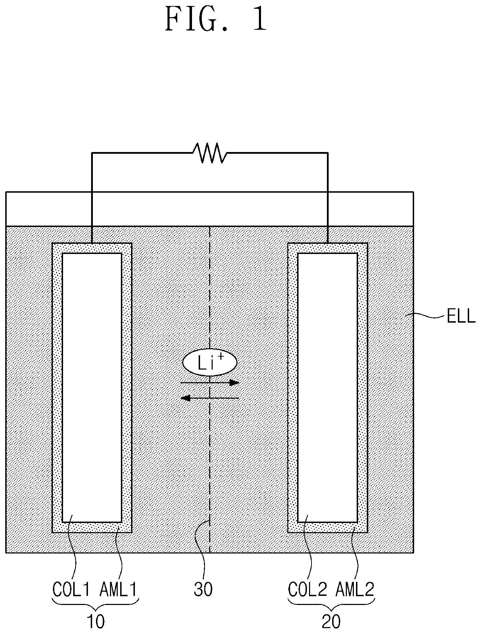

FIG. 1 illustrates a simplified conceptual diagram showing a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material.

For example, the positive electrode 10 may further include an additive that can constitute a sacrificial positive electrode.

An amount of the positive electrode active material may be ≥ 90 wt% to ≤ 99.5 wt% relative to 100 wt% of the positive electrode active material layer AML1. An amount of each of the binder and the conductive material may be ≥ 0.5 wt% to ≤ 5 wt% relative to 100 wt% of the positive electrode active material layer AML1.

The binder may improve attachment of positive electrode active material particles to each other and also to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may provide an electrode with conductivity, and any suitable conductive material without causing chemical change of a battery may be used as the conductive material to constitute the battery. The conductive material may include, for example, a carbon-based material such as at least one of natural graphite, artificial graphite, carbon black, acetylene black, Ketjenblack, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may be included in the current collector COL1, but the present disclosure is not limited thereto.

### Positive Electrode Active Material

The positive electrode active material in the positive electrode active material layer AML 1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and a combination thereof.

The composite oxide may include lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{d}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); LiₐFePO₄ (where 0.90≤a≤1.8).

In the chemical formulae above, A is or includes Ni, Co, Mn, or a combination thereof, X is or includes Al, Ni, Co, Mn, Cr, Fe, Mg, Sr, V, a rare-earth element, or a combination thereof, D is or includes O, F, S, P, or a combination thereof, G is or includes Al, Cr, Mn, Fe, Mg, La, Ce, Sr, V, or a combination thereof, and L¹ is or includes Mn, Al, or a combination thereof.

For example, the positive electrode active material may be or include a high nickel-based positive electrode active material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in the lithium transition metal composite oxide. The high nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material.

For example, the negative electrode active material layer AML2 may include a negative electrode active material of ≥ 90 wt% to ≤ 99 wt%, a binder of ≥ 0.5 wt% to ≤ 5 wt%, and a conductive material of ≥ 0 wt% to ≤ 5 wt%.

The binder may improve attachment of negative electrode active material particles to each other, and also to improve attachment of the negative electrode active material to the current collector COL2. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The conductive material may provide an electrode with conductivity, and any suitable conductive material without causing chemical change in a battery may be used as the conductive material to constitute the battery. For example, the conductive material may include a carbon-based material such as at least one of natural graphite, artificial graphite, carbon black, acetylene black, Ketjenblack, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, at least one of crystalline carbon, amorphous carbon, or a combination thereof. For example, the crystalline carbon may include graphite such as, e.g., non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, SiOₓ (where 0<x<2), Si-Q alloy (where Q is alkali metal, alkaline earth metal, a Group 13 element, a Group 14 element (except for Si), a Group 15 element, a Group 16 element, a transition metal, a rare-earth element, or a combination thereof), or a combination thereof. The Sn-based negative electrode active material may include at least Sn, SnO₂, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles, and may also include an amorphous carbon coating layer positioned on a surface of the core.

The Si-based negative electrode active material or the Sn-based negative electrode active material may be used in combination with a carbon-based negative electrode active material.

### Separator 30

Based on a type of the rechargeable lithium battery, the separator 30 may be present between the positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, which coating layer includes an organic material, an inorganic material, or a combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be or include a copolymer or mixture including two or more of the materials mentioned above.

The organic material may include at least a polyvinylidenefluoride-based copolymer or a (meth)acrylic copolymer.

The inorganic material may include an inorganic particle that is or includes at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in one coating layer or may be configured as a stack of a coating layer including the organic material and a coating layer including an inorganic material.

### Electrolyte ELL

The electrolyte ELL for the rechargeable lithium battery may include a non-aqueous organic solvent and a lithium salt.

The non-aqueous organic solvent may constitute a medium for transmitting ions that participate in an electrochemical reaction of a battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more substances.

In addition, when a carbonate-based solvent is used, a cyclic carbonate and a chain carbonate may be mixed and used, and the cyclic carbonate and the chain carbonate may be mixed in a volume ratio of ≥ 1:1 to ≤ 1:9.

The lithium salt may be or include a material that dissolves in the non-aqueous organic solvent to constitute a supply source of lithium ions in a battery, and that plays a role in enabling an operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluorobis(oxalato)phosphate (LiDFBOP), and lithium bis(oxalato)borate (LiBOB)

### Rechargeable Lithium Battery

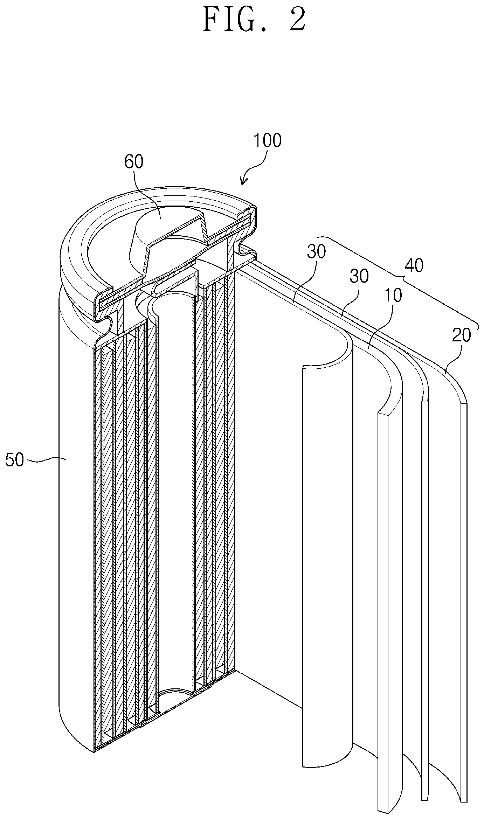

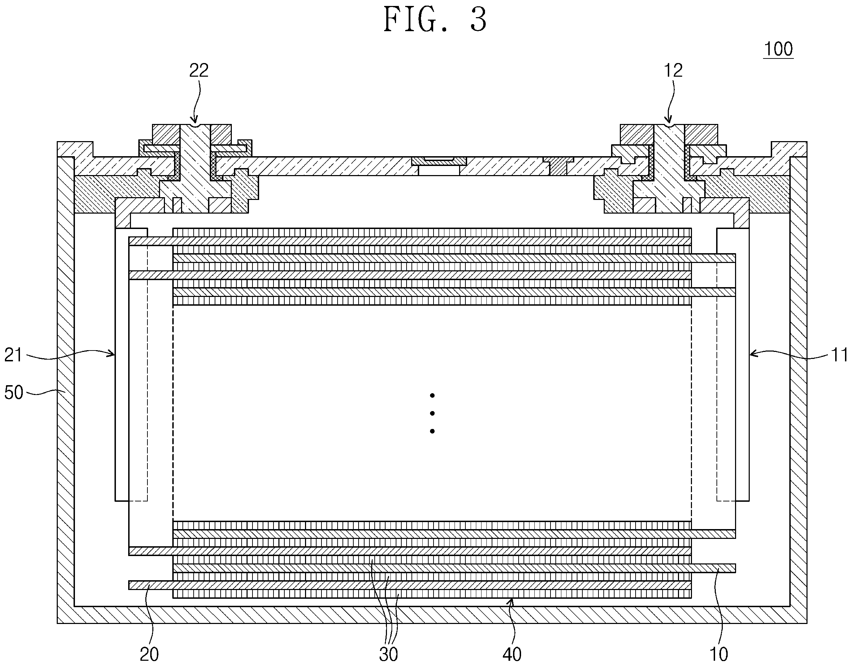

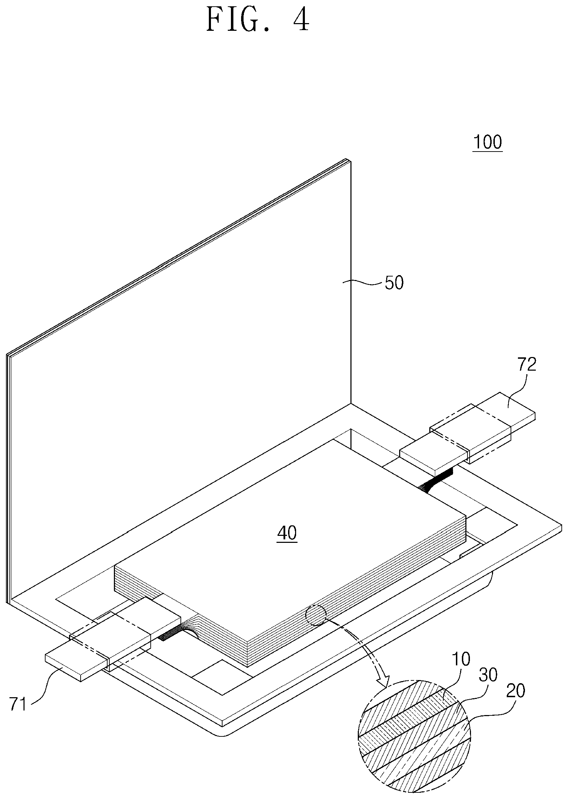

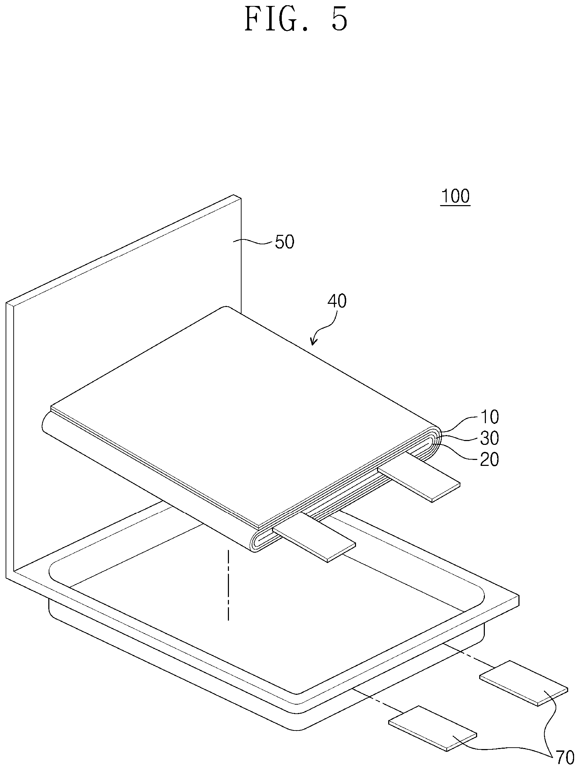

Based on the shape of a rechargeable lithium battery, the rechargeable lithium battery may be classified into cylindrical, prismatic, pouch, and coin types. In FIGS. 2 to 5 illustrating simplified diagrams showing a rechargeable lithium battery according to an example embodiment, FIG. 2 shows a cylindrical battery, FIG. 3 shows a prismatic battery, and FIGS. 4 and 5 show pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, and the electrode tab 70, or tabs 71/72, form an electrical path for externally inducing a current generated in the electrode assembly 40.

In the example embodiments that follow, a detailed description of technical features repetitive to technical features of the rechargeable lithium battery discussed with reference to FIGS. 1 to 5 will be omitted, and a difference thereof will be discussed in detail.

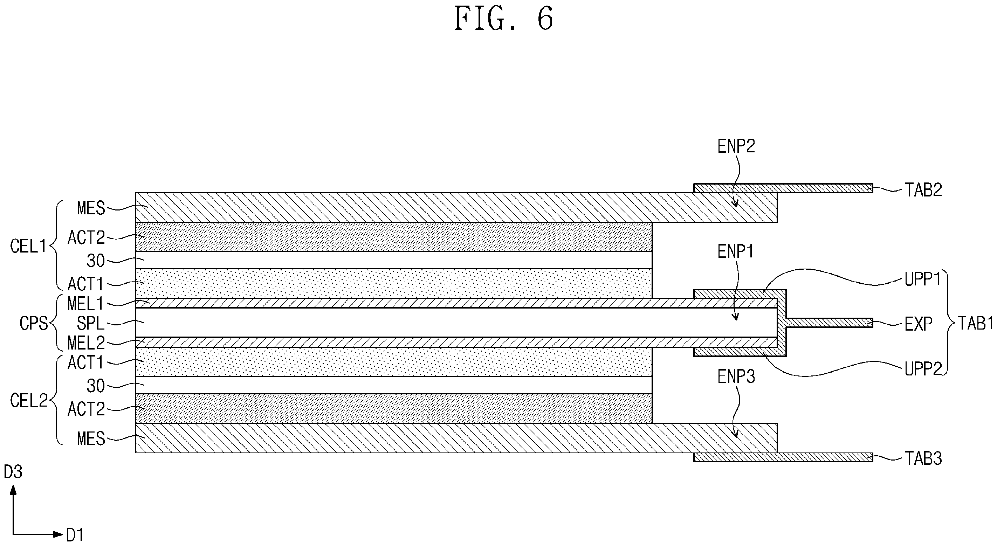

FIG. 6 illustrates a cross-sectional view showing a rechargeable lithium battery according to an example embodiment of the present disclosure. Referring to FIG. 6, there may be provided a composite substrate CPS, a first battery cell CEL1 on one surface of the composite substrate CPS, and a second battery cell CEL2 on another surface of the composite substrate CPS. A single bi-cell may be formed by the first battery cell CEL1, the second battery cell CEL2, and the composite substrate CPS of FIG. 6. The first battery cell CEL1, the second battery cell CEL2, and the composite substrate CPS of FIG. 6 may constitute the electrode assembly 40 discussed above with reference to FIGS. 3 to 5.

Each, or at least one, of the first and second battery cells CEL1 and CEL2 may include a first active material layer ACT1, a separator 30, a second active material layer ACT2, and a metal substrate MES. The first active material layer ACT1 may be provided on the composite substrate CPS. The second active material layer ACT2 may be spaced apart from the first active material layer ACT1 across the separator 30. The metal substrate MES may be provided on the second active material layer ACT2.

The first active material layer ACT1 may be or include one of the positive electrode active material layer AML1 and the negative electrode active material layer AML2 that are discussed above with reference to FIG. 1. The second active material layer ACT2 may be or include the other of the positive electrode active material layer AML1 and the negative electrode active material layer AML2 that are discussed above with reference to FIG. 1. In an example embodiment of the present disclosure, the first active material layer ACT1 may be the positive electrode active material layer AML1, and the second active material layer ACT2 may be the negative electrode active material layer AML2. The metal substrate MES may be one of the current collectors COL1 and COL2 discussed above with reference to FIG. 1.

The composite substrate CPS may include a support layer SPL, and may also include a first metal layer MEL1 and a second metal layer MEL2 provided on opposite surfaces of the support layer SPL. The first metal layer MEL1 of the composite substrate CPS may be in contact with the first active material layer ACT1 of the first battery cell CEL1. The second metal layer MEL2 of the composite substrate CPS may be in contact with the first active material layer ACT1 of the second battery cell CEL2. Each of the first and second metal layers MEL1 and MEL2 of the composite substrate CPS may correspond to one of the current collectors COL1 and COL2 that are discussed above with reference to FIG. 1.

The support layer SPL may include a dielectric material. The dielectric material may undergo high-temperature shrinkage due to Joule heating caused by short-circuit currents caused by the penetration of foreign metal substances such as, e.g., nails, and may hinder or prevent the first and second metal layers MEL1 and MEL2 from a direct electrical connection therebetween, thereby inhibiting or reducing short-circuits.

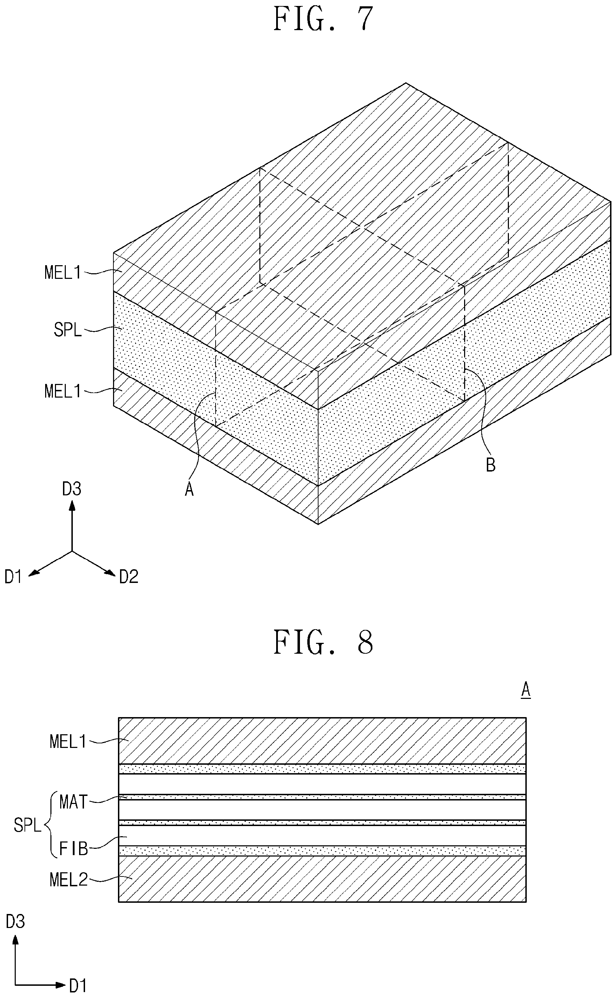

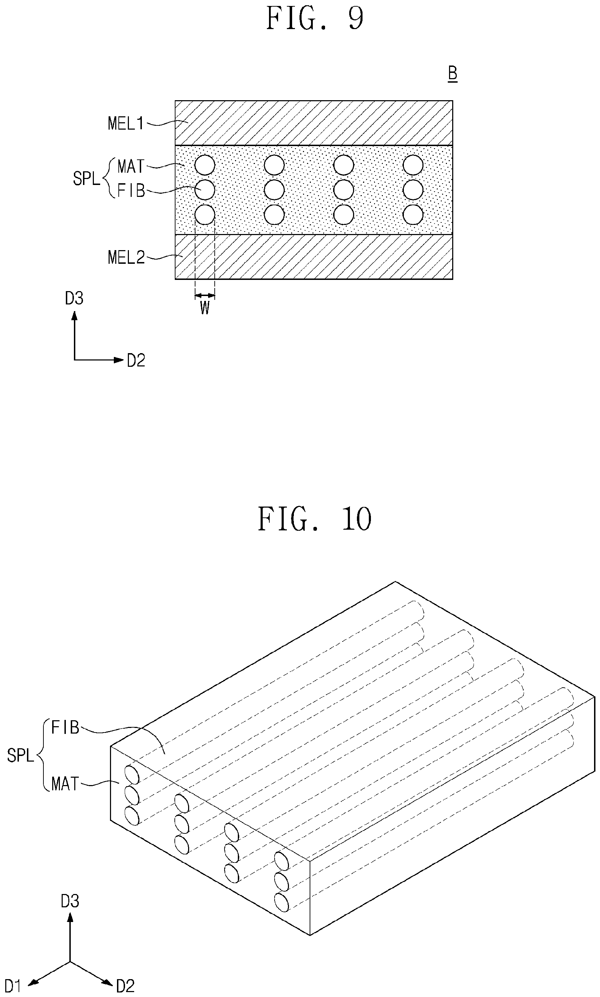

FIG. 7 illustrates a perspective view showing an electrode substrate for a rechargeable lithium battery according to an example embodiment of the present disclosure. FIG. 8 illustrates a cross-sectional view taken along a plane A of FIG. 7 according to an example embodiment of the present disclosure. FIG. 9 illustrates a cross-sectional view taken along a plane B of FIG. 7 according to an example embodiment of the present disclosure. The electrode substrate for a rechargeable lithium battery may be or include the composite substrate CPS discussed above with reference to FIG. 6.

Referring to FIGS. 7 to 9, the support layer SPL may include a polymer **resin matrix** MAT and a fiber FIB. The fiber FIB may be or include a reinforced fiber that improves physical properties such as strength of the support layer SPL. The polymer resin matrix MAT may maintain a shape of the support layer SPL and to transfer a load.

The support layer SPL may include a prepreg, or fibrous material preimpregnated with a resin, in which the polymer resin matrix MAT is impregnated into the fiber FIB. The support layer SPL may include a fiber-reinforced plastic. When the composite substrate CPS including the support layer SPL is used as an electrode substrate, it may be possible to increase an energy density due to a reduction in electrode weight, and to secure processability due to an improvement in mechanical strength of the composite substrate CPS.

The fiber FIB may have an amount of ≥ 0.01 vol% to ≤ 80 vol% relative to the total volume of the support layer SPL. For example, the fiber FIB may have an amount of ≥ 1 vol% to ≤ 5 vol%, ≥ 10 vol% to ≤ 30 vol%, or ≥ 40 vol% to ≤ 80 vol% relative to the total volume of the support layer SPL. When the fiber FIB has an amount of less than 1 vol%, strength of the composite substrate CPS may decrease to induce a reduction in bending strength, and when the fiber FIB has an amount of greater than 80 vol%, flexibility of the composite substrate CPS may decease to induce a reduction in tensile elongation.

The fiber FIB may include at least one of an acrylic fiber, an asbestos fiber, a carbon fiber, a glass fiber, a nylon fiber, a polyester fiber, a polyethylene fiber, a polypropylene fiber, a polyamide fiber, a rayon fiber, an aramid fiber, an alumina fiber, a silicon carbide fiber, and a boron fiber. For example, the fiber FIB may include at least one of a glass fiber and a polyamide fiber. The glass fiber and the polyamide fiber may have thermal shrinkage greater than other fibers. Therefore, the support layer SPL may undergo high-temperature shrinkage due to Joule heating caused by short-circuit currents in the case of penetration of foreign metal substances such as nails to hinder or prevent the first and second metal layers MEL 1 and MEL2 from a direct electrical connection therebetween, thereby inhibiting short-circuits.

There may be no particular limitation on the utilization of resin as the polymer resin matrix MAT as long as the resin has impregnation into the fiber FIB and achieves the tensile strength necessary or sufficient for handing in a process.

The polymer resin matrix MAT may include a thermoplastic resin. When a thermoplastic resin is chosen as the polymer resin matrix MAT, an improved, desired or advantageous electrical insulation may be accomplished to reduce electrical conductivity of the support layer SPL and to hinder or prevent a direct electrical connection between the first and second metal layers MEL1 and MEL2, thereby inhibiting short-circuits.

The thermoplastic resin may include at least one of polyethylene terephthalate (PET), polybutylene terephthalate (PBT), polytrimethylene terephthalate (PTT), polyethylene naphthalate (PEN), polyethylene (PE), polypropylene (PP), polybutylene (PB), polystyrene (PS), polyoxymethylene (POM), polyamide (PA), polyphenylene sulfide (PPS), polyketone (PK), polyether ketone (PEK), polyether ether ketone (PEEK), polyether ketone ketone (PEKK), polyether nitrile (PEN), polytetrafluoroethylene (PTFE), polycarbonate (PC), polymethyl methacrylate (PMMA), polyvinyl chloride (PVC), polyphenylene ether (PPE), polyimide (PI), polyamide-imide (PAI), polyetherimide (PEI), polysulfone (PSU), polyethersulfone (PES), and polyarylate (PAR).

The polymer resin matrix MAT may include a thermosetting resin. When a thermosetting resin is chosen as the polymer resin matrix MAT, a high tensile strength may be achieved to hinder or prevent the composite substrate CPS from being damaged during an electrode process.

The thermosetting resin may include at least one of epoxy, unsaturated polyester, vinylester polyamide, and phenol.

FIG. 10 illustrates a perspective view showing an orientation of the fiber FIB within the support layer SPL according to an example embodiment of the present disclosure. Referring to FIGS. 8 to 10, the fiber FIB may be unidirectionally oriented. The fiber FIB may be oriented in a first direction D1. The fiber FIB may be or include a "continuous fiber in the form of long fiber." A major axis, or a longitudinal direction, of the "continuous fiber in the form of long fiber" may be substantially parallel to the first direction D1.

In an example embodiment of the present disclosure, a length in the first direction D1 of the "continuous fiber in the form of long fiber" may be substantially the same as a length in the first direction D1 of the support layer SPL, and a strand of the fiber FIB may continuously connected in the first direction D 1. "Substantially the same" here includes a 5% difference in length in the first direction D1 between the fiber FIB and the support layer SPL, or when a fiber stand is partially cut during fabrication. According to the example embodiment, the composite substrate CPS may exhibit improved or maximum resistance to a longitudinal force and thus may have a high tensile strength in spite of a relatively small amount of the fiber FIB. The support layer SPL may include a prepreg in which the polymer resin matrix MAT is impregnated into the fiber FIB oriented in the first direction D1. In this case, the support layer SPL may have a weight and thickness that are less than the weight and thickness of other fibers having the same strength as the strength of the support layer SPL.

Referring to FIG. 9, the fiber FIB according to an example embodiment of the present disclosure may have an average cross-sectional diameter W, or a length of a minor axis substantially perpendicular to the major axis. The average cross-sectional diameter W of the fiber FIB may range from ≥ 0.1 µm to ≤ 10 µm. For example, the average cross-sectional diameter W of the fiber FIB may range from ≥ 0.1 µm to ≤ 8 µm or from ≥ 1 µm to ≤ 6 µm. When the fiber FIB has an average cross-sectional diameter W of less than the range above, strength of the composite substrate CPS may decrease to induce a reduction in bending strength, and when the fiber FIB has an average cross-sectional diameter W that is greater than any of the ranges above, flexibility of the composite substrate CPS may decease to induce a reduction in tensile elongation.

The fiber FIB may have an aspect ratio (average length/average cross-sectional diameter) ranging from ≥ 10,000 to ≤ 200,000.

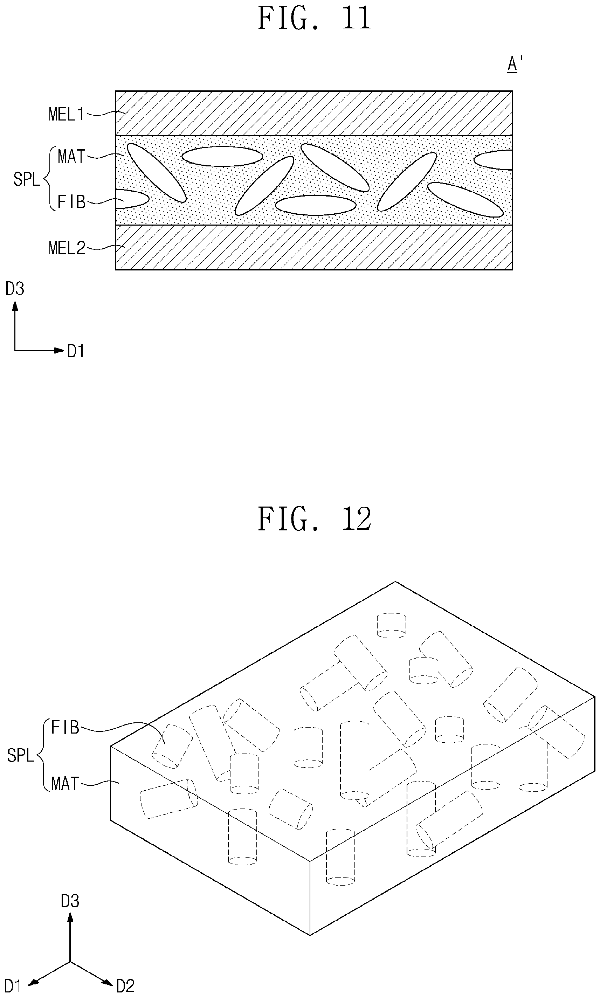

FIG. 11 illustrates a cross-sectional view taken along a plane A of FIG. 7 according to another example embodiment of the present disclosure. FIG. 12 illustrates a perspective view showing an orientation of the fiber FIB within the support layer SPL according to an example embodiment of the present disclosure. Referring to FIGS. 11 and 12, the fiber FIB may be substantially randomly oriented in two or more directions. For example, as shown in FIGS. 11 and 12, the fiber FIB may be three-dimensionally irregularly oriented in the polymer resin matrix MAT. In this case, the composite substrate CPS may have three-dimensional isotropy to secure uniform physical properties. The fiber FIB may have an average length of ≥ 0.1 mm to ≤ 20 mm. For example, the fiber FIB may have an average length of ≥ 0.1 mm to ≤ 17 mm, ≥ 0.1 mm to ≤ 15 mm, or ≥ 0.1 mm to ≤ 10 mm. When the fiber FIB has an average length that is greater than 20 mm, it may be easier to accomplish unidirectional or two-dimensional irregular orientation rather than three-dimensional irregular orientation, and there may also be a probability of occurrence of multiple aggregations.

Although not shown, in the example embodiment of FIGS. 11 and 12, the fiber FIB may have an average cross-sectional diameter W, or a length of a minor axis substantially perpendicular to the major axis. The average cross-sectional diameter W of the fiber FIB may range from ≥ 0.1 µm to ≤ 10 µm. For example, the average cross-sectional diameter W of the fiber FIB may range from ≥ 0.1 µm to ≤ 8 µm or from ≥ 1 µm to ≤ 6 µm. When the fiber FIB has an average cross-sectional diameter W of less than the range above, strength of the composite substrate CPS may decrease to induce a reduction in bending strength, and when the fiber FIB has an average cross-sectional diameter W of greater than the range above, flexibility of the composite substrate CPS may decease to induce a reduction in tensile elongation.

In the example embodiment of FIGS. 11 and 12, the fiber FIB may have an aspect ratio (average length/average cross-sectional diameter) ranging from ≥ 1 to ≤ 2,000. For example, the fiber FIB may have an aspect ratio ranging from ≥ 10 to ≤ 500 or from ≥ 10 to ≤ 300.

Referring back to FIG. 6, each, or one, of the first and second metal layers MEL1 and MEL2 may include at least one of aluminum, aluminum alloys, copper, copper alloys, nickel, nickel alloys, titanium, titanium alloys, iron, iron alloys, silver, and silver alloys.

In an example embodiment of the present disclosure, each, or one, of the first and second metal layers MEL1 and MEL2 may have a thickness of ≥ 200 nm to ≤ 5 µm. The support layer SPL may have a thickness of ≥ 3 µm to ≤ 10 µm. The thickness of the support layer SPL may be greater than that of the first and second metal layers MEL1 and MEL2.

The composite substrate CPS may include a first end portion ENP1 at one end thereof. The metal substrate MES of the first battery cell CEL1 may include a second end portion ENP2 at one end thereof. The metal substrate MES of the second battery cell CEL2 may include a third end portion ENP3 at one end thereof.

A first tab TAB1 may be located on the first end portion ENP1 of the composite substrate CPS. The first tab TAB1 may include a first connection portion UPP1, a second connection portion UPP2, and an extension portion EXP. The first connection portion UPP1 may be in contact with the first metal layer MEL1 of the composite substrate CPS. The second connection portion UPP2 may be in contact with the second metal layer MEL2 of the composite substrate CPS. The extension portion EXP may connect the first connection portion UPP1 and the second connection portion UPP2 to each other. The extension portion EXP may horizontally extend in the first direction D1 from the first end portion ENP1.

The first tab TAB1 may electrically connect the first metal layer MEL1 and the second metal layer MEL2 to each other. The first tab TAB1 may be configured to apply a voltage in common to the first metal layer MEL 1 and the second metal layer MEL2.

A second tab TAB2 may be located on the second end portion ENP2 of the composite substrate CPS. The second tab TAB2 may be configured to apply a voltage to the metal substrate MES of the first battery cell CEL1. A third tab TAB3 may be provided on the third end portion ENP3 of the composite substrate CPS. The third tab TAB3 may be configured to apply a voltage to the metal substrate MES of the second battery cell CEL2.

The first tab TAB1 may constitute one of the positive electrode tab 71 (or the positive electrode lead tab 11) and the negative tab 72 (or the negative lead tab 21) discussed above with reference to FIGS. 2 to 4. The second tab TAB2 may constitute the other of the positive electrode tab 71 (or the positive electrode lead tab 11) and the negative tab 72 (or the negative lead tab 21) discussed above with reference to FIGS. 2 to 4.

The composite substrate CPS according to the present disclosure may have increased tensile strength. In an example embodiment, the tensile strength of the composite substrate CPS according to the present disclosure may range from ≥ 200 MPa to ≤ 1,000 MPa. For example, the tensile strength of the composite substrate CPS according to the present disclosure may range from ≥ 275 MPa to ≤ 1,000 MPa or from ≥ 300 MPa to 400 MPa.

The composite substrate CPS according to the present disclosure may have increased bending strength. In an example embodiment, the bending strength of the composite substrate CPS according to the present disclosure may range from ≥ 100 MPa to ≤ 1,000 MPa. For example, the bending strength of the composite substrate CPS according to the present disclosure may range from ≥ 184 MPa to ≤ 1,000 MPa or from ≥ 200 MPa to 500 MPa.

The composite substrate CPS according to the present disclosure may have increased tensile elongation. In an example embodiment, the tensile elongation of the composite substrate CPS according to the present disclosure may be equal to or greater than 3%. For example, the tensile elongation of the composite substrate CPS according to the present disclosure may be equal to or greater than 4%, equal to or greater than 7%, or equal to or greater than 10%. The tensile elongation of the composite substrate CPS according to the present disclosure may be equal to or less than 100%.

The following description will focus on some embodiments of the present disclosure. The following example embodiments are provided to aid in understanding of the present disclosure and are not intended to limit the scope of the present disclosure.

### [Fabrication of Composite Substrate Specimen]

### Example Embodiment 1

There was prepared a support layer containing a prepreg which includes a polyethylene terephthalate (PET) resin impregnated into a unidirectionally oriented glass fiber and subsequently dried or semi-cured. In this case, a continuous fiber in the form of long fiber was used as the glass fiber. An average cross-sectional diameter of the glass fiber was 5 µm. The glass fiber was prepared in an amount of 50 vol% relative to the total volume of the support layer, and the support layer was prepared to have a thickness of 10 µm. A copper plating was performed on opposite surfaces of the prepared support layer to manufacture a composite substrate. A first metal layer was formed to have a uniform thickness on a top surface of the support layer, and a second metal layer was formed to have a uniform thickness on a bottom surface of the support layer. Each of the first metal layer and the second metal layer was formed to have a thickness of 1 µm. The formed composite substrate was cut with a thickness of 150 mm in a direction in which the glass fiber is oriented and a thickness of 80 mm in a direction perpendicular to the orientation of the glass fiber, thereby manufacturing a composite substrate specimen.

### Example Embodiment 2

There were prepared a PET powder and a glass fiber having a length of 1.0 mm or less and a diameter of 5 µm. The prepared glass fiber and powder were chopped and milled, and subsequently injected in two or more directions with random orientations. A semi-finished product in the form of sheet was stretched in a machine direction (MD) and a width direction (TD), and subsequently a heat setting process was performed to manufacture a bi-axially stretched PET composite film.

### Example Embodiment 3

A composite substrate specimen was manufactured in the same method as in Embodiment 1, with a difference that the glass fiber was replaced with a polyamide (PA) fiber having the same diameter as that of the glass fiber.

### Example Embodiment 4

A composite substrate specimen was manufactured in the same method as in Embodiment 1, with a difference that a polyimide (PI) resin was used instead of the polyethylene terephthalate (PET) resin.

### Example Embodiment 5

A composite substrate specimen was manufactured in the same method as in Embodiment 1, with a difference that a polyether nitrile (PEN) resin was used instead of the polyethylene terephthalate (PET) resin.

### Example Embodiment 6

A composite substrate specimen was manufactured in the same method as in Embodiment 1, with a difference the use of a glass fiber having an average diameter of 7 µm.

### Comparative Example 1

In manufacturing the composite substrate specimen of Example Embodiment 1, no glass fiber was included to manufacture the composite substrate specimen.

### Comparative Example 2

In manufacturing the composite substrate specimen of Example Embodiment 1, the composite substrate specimen was manufactured to cause the glass fiber to have an amount of 95 vol% relative to the total volume of the support layer.

### Comparative Example 3

In manufacturing the composite substrate specimen of Example Embodiment 1, the composite substrate specimen was manufactured using a glass fiber having an average diameter of 20 µm.

### Evaluation of Physical Properties

### 1. Tensile Strength and Elongation

According to ASTM standard test method D3039, a universal testing machine (UTM) was used to measure tensile strength and tensile elongation of the composite substrate specimens manufactured in the Example Embodiments and the Comparative Examples.

### 2. Bending Strength

According to ASTM standard test method D790-17, a universal testing machine was used to measure bending strength of the composite substrate specimens manufactured in the Example Embodiments and the Comparative Examples.

Table 1 below lists the evaluation results of the Example Embodiments and the Comparative Examples.

**[Table 1]**

| | Fiber amount (vol%) | Fiber diameter (*µ*m) | Tensile strength (MPa) | Bending strength (MPa) | Tensile elongation (%) | Note |
|---|---|---|---|---|---|---|
| Embodiment 1 (PET + long glass fiber) | 50 | 5 | 334 | 243 | 11 | |
| Embodiment 2 (PET + short glass fiber) | 50 | 5 | 315 | 420 | 10 | |
| Embodiment 3 (PET + PA) | 50 | 5 | 275 | 184 | 14 | |
| Embodiment 4 (PI + long glass fiber) | 50 | 5 | 362 | 281 | 7 | |
| Embodiment 5 (PEN + long glass fiber) | 50 | 5 | 391 | 314 | 4 | |
| Embodiment 6 (PET + long glass fiber) | 50 | 7 | 352 | 265 | 9 | |
| Comparative Example 1 (PET) | 50 | - | 170 | 103 | 15 | |
| Comparative Example 2 (PET + long glass fiber) | 95 | 5 | 420 | 562 | 2 | |
| Comparative Example 3 (PET + long glass fiber) | 50 | 20 | - | - | - | Specimen could not be made |

Referring to Table 1, it may be ascertained that the composite substrates according to Example Embodiments 1 to 6 have superior tensile strength and bending strength compared to the tensile strength and bending strength of the composite substrate according to Comparative Example 1.

Referring to Table 1, it may be ascertained that the composite substrates according to Example Embodiments 1 to 6 have a superior tensile elongation to the tensile elongation of the composite substrate according to Comparative Example 2. For example, it may be ascertained that Example Embodiments 1 and 2 have superior or improved tensile strength and bending strength and also have improved, desired or advantageous tensile elongation.

Referring to Table 1, in Comparative Example 3, there was a section where the fiber was not impregnated in the impregnation process. This induced the formation of surface undulation and damage to the composite substrate and the metal layer during the process, making it substantially difficult to manufacture an electrode.

An electrode substrate for a rechargeable lithium battery may have improved mechanical strength. Thus, a composite substrate of the present disclosure may reduce or suppress a substrate variation occurring during processes to thereby improve processability. In addition, the composite substrate of the present disclosure may reduce or suppress a substrate variation during a cell operation to thereby improve stability and energy density.

A rechargeable lithium battery including the electrode substrate for an electrode may have improved, desired or advantageous cell performance.

Although some example embodiments of the present disclosure have been discussed with reference to accompanying figures, it will be understood that various changes in form and details may be made therein without departing from the spirit and scope of the present disclosure. It will be apparent to those skilled in the art that various substitution, modifications, and changes may be thereto without departing from the scope and spirit of the present disclosure.

## Claims

1. An electrode substrate for a rechargeable lithium battery (100), the electrode substrate comprising:
a support layer including a polymer resin matrix and a fiber; and
a metal layer on at least one surface of the support layer,
wherein an average cross-sectional diameter of the fiber is in a range of ≥ 0.1 µm to ≤ 10 µm.

2. The electrode substrate of claim 1, wherein the fiber is included in the support layer in an amount of ≥ 1 vol% to ≤ 80 vol%.

3. The electrode substrate of claim 1 or 2, wherein the polymer resin matrix comprises a thermoplastic resin.

4. The electrode substrate of any of the claims 1 to 3, wherein the thermoplastic resin comprises at least one of polyethylene terephthalate (PET), polybutylene terephthalate (PBT), polytrimethylene terephthalate (PTT), polyethylene naphthalate (PEN), polyethylene (PE), polypropylene (PP), polybutylene (PB), polystyrene (PS), polyoxymethylene (POM), polyamide (PA), polyphenylene sulfide (PPS), polyketone (PK), polyether ketone (PEK), polyether ether ketone (PEEK), polyether ketone ketone (PEKK), polyether nitrile (PEN), polytetrafluoroethylene (PTFE), polycarbonate (PC), polymethyl methacrylate (PMMA), polyvinyl chloride (PVC), polyphenylene ether (PPE), polyimide (PI), polyamide-imide (PAI), polyetherimide (PEI), polysulfone (PSU), polyethersulfone (PES), and polyarylate (PAR).

5. The electrode substrate of any of the claims 1 to 4, wherein the polymer resin matrix comprises a thermosetting resin.

6. The electrode substrate of any of the claims 1 to 5, wherein the thermosetting resin comprises at least one of epoxy, unsaturated polyester, vinylester polyamide, and phenol.

7. The electrode substrate of any of the claims 1 to 6, wherein the fiber comprises at least one of an acrylic fiber, an asbestos fiber, a carbon fiber, a glass fiber, a nylon fiber, a polyester fiber, a polyethylene fiber, a polypropylene fiber, a polyamide fiber, a rayon fiber, an aramid fiber, an alumina fiber, a silicon carbide fiber, and a boron fiber.

8. The electrode substrate of any of the claims 1 to 7, wherein the fiber is unidirectionally oriented.

9. The electrode substrate of any of the claims 1 to 7, wherein an aspect ratio of the fiber is in a range of ≥ 10,000 to ≤ 200,000.

10. The electrode substrate of any of the claims 1 to 9, wherein the fiber is substantially randomly oriented in two or more directions.

11. The electrode substrate of any of the claims 1 to 10, wherein an aspect ratio of the fiber is in a range of ≥ 1 to ≤ 2,000.

12. The electrode substrate of any of the claims 1 to 11, wherein the metal layer comprises at least one of aluminum, aluminum alloys, copper, copper alloys, nickel, nickel alloys, titanium, titanium alloys, iron, iron alloys, silver, and silver alloys.

13. The electrode substrate of any of the claims 1 to 12, wherein a thickness of the metal layer is in a range of ≥ 200 nm to ≤5 µm.

14. The electrode substrate of any of the claims 1 to 13, wherein a thickness of the support layer is in a range of ≥ 3 µm to ≤ 10 µm.

15. A rechargeable lithium battery (100), comprising:
the electrode substrate of any of the claims 1 to 14; and
a battery cell on the electrode substrate.
